# EUROPEAN PATENT SPECIFICATION

(11) **EP 3 824 215 B1**
(45) Date of publication and mention of the grant of the patent: **29.12.2021**
(21) Application number: 20714004.7
(22) Date of filing: 20.03.2020
(51) Int. Cl.: F16L 59/02, F16L 59/065

(54) **INSULATED PIPE**
ISOLIERTES ROHR
CONDUITE ISOLÉE

(30) Priority: 05.04.2019 NL 2022875
(43) Date of publication of application: 26.05.2021
(73) Proprietor: Thermaflex International Holding B.V., 5145 NS Waalwijk (NL)
(72) Inventor: DE BELL, Humphrey Reginald, 5145 NS WAALWIJK (NL)
(74) Representative: van Dam, Vincent
(86) International application number: PCT/NL2020/050189
(87) International publication number: WO 2020/204700

(56) References cited:
- WO-A1-95/00797
- WO-A1-2017/144609
- DE-A1- 3 741 241

## Description

The present invention relates to an insulated pipe and use thereof in systems that require insulated pipes, such as heating systems.

### Introduction

In the field of thermal insulation techniques insulated pipes are commonly used to transport a hot or cold medium, such as water, to the place of need thereof.

For instance, insulated pipes are used in heat distribution systems, such as district heat distribution networks in order to transport heat to secondary distribution networks, for instance heat networks of houses or other buildings.

In order to avoid heat loss during transfer of the heating medium to the eventual destination it is important that the pipes used are well insulated.

Various insulation techniques are known in the art of thermal insulation. One of these techniques is vacuum insulation. This technique makes use of vacuum insulation panels. Use of vacuum insulation panels for thermal insulation purposes has recently gained increased interest. The thermal conductivity of vacuum insulation panels is in general lower than that of conventional insulation materials. Therefore, if vacuum insulation panels are used as pipe insulation this can lead to improved insulation compared to conventional insulation materials. Thus, when vacuum insulation panels are used as pipe insulation in a heating network this may lead to a decreased loss of heat during transport of the heating medium.

The use of vacuum insulation panels as pipe insulation has been described for instance in WO 2017/144609 A1. This patent application discloses insulated pipes for use in district heating networks which have an inner pipe surrounded by a vacuum insulation panel.

### Summary of the invention

Heating networks such as district heating networks often require transport of heating medium (such as hot water) with a temperature of up to 90-95°C. The inventors have found that exposure of a vacuum insulation panel to such high temperatures has an adverse effect on the life time of the vacuum insulation panel. These high temperatures cause accelerated aging of the materials of the vacuum insulation panel, which is accompanied with brittleness of said materials. This eventually leads to leakage, loss of vacuum and consequently loss of insulation capacity.

Therefore, if insulated pipe systems as disclosed for instance WO 2017/144609 A1 are used in the abovementioned heating networks the vacuum insulation panels surrounding the inner pipes are exposed to high temperatures of up to 90-95°C, leading to the abovementioned adverse effects.

With the present invention the inventors have found a way to improve the lifetime of vacuum insulation panels in insulated pipes and therewith the lifetime of the insulated pipes.

The present invention therefore relates in one aspect to an insulated pipe, comprising one or more inner pipes surrounded by a discrete first foam layer and a flexible vacuum insulation panel wrapped around said first foam layer.

In a second aspect the invention relates to a heating system comprising one or more insulated pipes according to the first aspect in connection with a heat source.

The inventors have surprisingly found that the use of a foam layer between the outer surface of an inner pipe and a vacuum insulation panel surrounding said inner pipe leads to increased lifetime of the vacuum insulation panel and therewith the lifetime of the insulated pipes, with stable and non-decreasing insulation properties in time. Namely, by the provision of this foam layer between the vacuum insulation panel and the inner pipe containing hot medium with a temperature of 90-95 °C, a slight decrease in the temperature is realized at the surface of the vacuum insulation panel facing said inner pipe, so that the vacuum insulation panel is only exposed to temperatures of maximal 60-70 °C. At these lower temperatures, aging of the vacuum insulation panel is almost completely prevented. With the provision of the present invention insulated pipes with a lifetime of up to 40 years are realized.

### Short description of the drawings

Fig. 1 shows a cross section of an embodiment of an insulated pipe according to the invention.
Fig. 2 shows a cross section of another embodiment of an insulated pipe according to the invention.
Fig. 3A shows a cross section of another embodiment of an insulated pipe according to the invention.
Fig. 3B shows a perspective view of the insulated pipe of Fig. 3A.
Fig. 4 shows a cross section of an embodiment of an insulated pipe according to the invention having two inner pipes.
Fig. 5 shows a cross section of another embodiment of an insulated pipe according to the invention having two inner pipes.

### Detailed description of the invention

The present invention is based on the use, in an insulated pipe, of a foam layer between an inner pipe of said insulated pipe and a vacuum insulation panel surrounding said inner pipe for conferring extended lifetime of the vacuum insulation panel and therewith maintenance of stable insulation values of said insulated pipe in time.

The insulated pipe may contain one or more inner pipes. The one or more inner pipes may be composed of any material suitable for use of the intended purpose. For purposes of use in a heating system it is preferred that the one or more inner pipes are plastic pipes, because these materials are corrosion and temperature resistant and in general flexible to a certain extent while providing enough strength for the intended use. Suitable plastics in this regard are for instance polyolefine plastics. For instance it is possible to use non-crosslinked polyolefines. Such non-crosslinked polyolefines may include selected polyethylene, such as PE-RT (polyethylene of raised temperature resistance), polypropylene, such as PPR, polybutylene terephthalate (PBT), polybutene and mixtures thereof. A very suitable material is polybutene, a polymer made from a mixture of 1-butene, 2-butene and isobutylene. The advantage of using non-crosslinked polyolefines is that these are recyclable. It is also possible to use a cross-linked polyolefine as basis material for the one or more inner pipes, for instance cross-linked polyethylene (PEX) which may for instance be high density polyethylene (HDPE), which has high flexibility and hightemperature resistance.

Suitable inner pipes may be provided with a so-called diffusion barrier, for instance in the form of an EVOH foil glued to the outer surface of the one or more inner pipes. Such a diffusion barrier is resistant to humidity and prevents oxygen from entering the medium in the insulated pipes, which on its turn decreases the risk of oxidation of heating network components.

Vacuum insulation panels as used in the present invention are sheets in which insulating materials or inert fillers are completely encapsulated in an envelope, which is impermeable to gases. The envelope is evacuated to create a vacuum core. Once the vacuum has been applied it is retained for a long time, provided that the envelope is intact.

In accordance with the present invention, a flexible vacuum insulation panel is used. This allows the vacuum insulation panel to be wrapped around the foam layer (first foam layer) surrounding the one or more inner pipes. Such a flexible vacuum insulation panel has a higher flexibility than a vacuum insulation panel having a core comprising prepressed silica. An example of a flexible vacuum insulation panel has a core comprising a powdery material, for instance powder of inorganic oxides.

The flexible vacuum insulation panels for use in the present invention preferably have a thickness from 3 to 40 mm, more preferably 3 to 35 mm, most preferred 3 to 10 mm. In a suitable exemplary embodiment the flexible vacuum insulation panel has a thickness of approximately 5 mm.

Suitable flexible vacuum insulation panels for purposes of the present invention and the production thereof are for instance described in above mentioned WO 2017/144609 A1. Suitable flexible vacuum insulation panels for use in the present invention are commercially available, for instance from VA-Q-TEC AG (DE).

The flexible vacuum insulation panel is wrapped around the first foam layer. The first foam layer is formed as a discrete foam layer between a vacuum insulation panel and one or more inner pipe (s). This way the vacuum insulation fittingly surrounds the foam layer without the risk of damaging the panel during construction of the pipe. This can be done by wrapping a rectangular sheet of vacuum insulation panel around the first foam layer and fixing (e.g. with glue) the ends to each other so that there is no gap or cleft in the longitudinal direction of the pipe between the ends of the vacuum insulation panel. Fixing the one end of the vacuum insulation panel to the other may be done before or after wrapping the vacuum insulation panel around said first foam layer, for practical purposes preferably after. It is also possible that one end of the vacuum insulation panel overlaps the other end and that the vacuum insulation panel is fixed in a desired position. In this respect it is also envisaged that the vacuum insulation panel is wrapped more than once around one or more inner pipes.

In order to maintain insulation properties in case of cutting a pipe according to the invention to size, it is possible that barriers are provided in the vacuum insulation panel avoid loss of vacuum as much as possible. These barriers are preferably provided in the vacuum insulation panel orthogonal to the longitudinal axis of the pipe. Alternatively, multiple vacuum insulation panels may be abutted, preferably sealingly, to each other in longitudinal direction of the pipe. This way an insulation pipe according to the invention can be sized to the desired length without loss of vacuum and thus insulation properties.

The foam between the one or more inner pipes and the vacuum insulation panel, i.e. the first foam layer, may be made of a flexible or non-flexible foam as long as it is able to realize the temperature drop from 90-95°C at the outer surface of an inner pipe to 60-70°C on the surface of the vacuum insulation panel facing the inner pipe.

In a preferred embodiment the first foam layer is a flexible foam. This allows bending of the insulation pipe of the invention without the risk of damages such as cracks. Moreover, it also lowers the risk of damage of the vacuum insulation panel due to possible uneven surfaces.

Without limitation, suitable materials for the first foam layer may include foams common in the field of thermal insulation such as polyolefine foams, such as polyethylene foams (crosslinked or non-crosslinked), polyurethane foams, or phenolic foams. Foams may be open or closed cell foams depending on the desired insulation properties or anything in between.

Very suitable polyolefine insulation foams are the foams disclosed in WO 01/94092 A1, WO 02/42679 A1 or WO 2019/050402 A1 of the present applicant. These foams are flexible, recyclable and have excellent insulation properties.

In a preferred embodiment the foam of the first foam layer may be based on a non-crosslinked polyolefine foam. Such a foam is flexible, recyclable and has excellent insulation properties. Such foams are described and claimed for instance in WO 2019/050402 A1 of the present applicant.

The thickness of the first foam layer may depend on its thermal insulation properties. The thickness should be chosen such that it allows a temperature drop from 90-95°C on the outer surface of the one or more inner tubes to 60-70°C on the surface of the vacuum insulation panel facing the inner pipe. For instance, if a foam as described in the example of WO 2019/050402 A1 is used a thickness of the first foam layer between 5 to 10 mm, such as 7,5 mm, would be suitable to realize this temperature drop.

In a preferred embodiment the insulated pipe according to the invention further comprises a second foam layer surrounding said vacuum insulation panel. This second foam layer protects the vacuum insulation panel from the environment surrounding it on one hand, while increasing thermal insulation on the other hand. The material of the second foam layer may be selected from the same materials and have the same properties as described above for the first foam layer.

The first foam layer and optional second foam layer are applied as discrete, separate foam layers. This allows flexibility in construction of the insulated pipe of the invention, because insulated pipes of various configurations can be made without necessitating substantial adaptations in the production line.

In a preferred embodiment the first and second foam layer are the same material. The thickness of the second foam layer may be chosen depending on the desired total thickness of the insulated pipe of the invention and the desired insulation and/or protection properties. In a suitable embodiment wherein the second foam layer is a foam as described in the example of WO 2019/050402 A1 of the present applicant a thickness of the second foam layer may be between 10 to 40 mm, such as 20 mm.

In a further preferred embodiment the insulated pipe according to the invention further comprises an outer casing. This is also for protection of the vacuum insulation panel. The outer casing may be of the same material as the one or more inner pipes and may therefore suitably be a plastic casing. The outer casing may be a smooth film or an outer pipe, for instance a plastic outer pipe. It is preferred that said outer casing is a corrugated outer casing. Such a corrugated or ribbed casing has ribs extending over the circumference of the casing, which provides additional strength and thus protection from the environment surrounding it. A corrugated casing may be realized for instance as described in WO 02/31400 A1 of the present applicant.

The insulated pipes of the invention may suitably contain more layers of material except for the above mentioned layers, such as coatings and the like. For instance the inner pipe may consist of multiple layers and/or the vacuum insulation panel may comprise a coating layer and/or the foam layers may consist of multiple sublayers of foam.

As mentioned above the insulated pipe of the invention may comprise one or more inner pipes.

In a suitable embodiment the insulated pipe according to the invention comprises only one inner pipe arranged in a concentric manner with respect to the first foam layer, the vacuum insulation panel, the optional second foam layer and the optional outer casing.

In a further embodiment the insulated pipe according to the invention comprises multiple inner pipes. For instance, it is very common to use an insulated pipe with two inner pipes.

In this embodiment each pipe may be surrounded by a separate flexible vacuum insulation panel, and first foam layers are provided between the outer surface of the pipes and said flexible vacuum insulation panels. In this case each inner pipe is surrounded by a separate first foam layer and a separate vacuum insulation panel. If a second foam layer is used herein this may be a single second foam layer surrounding all vacuum insulation panels. This applies also for the optional outer casing.

Another possibility is that said multiple pipes are surrounded by a common flexible vacuum insulation panel. In this case a first foam layer is provided between the outer surface of said pipes and said common flexible vacuum insulation panel. The first foam layer may here be a single entity covering all inner pipes, thus filling the space between the inner pipes and the space between the inner pipes and the common vacuum insulation panel.

The insulated pipe can be made via various ways known in the art and may for instance involve wrapping the layers over each other or involve an extrusion process as described in WO 02/31400 A1 to apply the first foam layer around the one or more inner pipes. In preferred embodiment, the first foam layer, the vacuum insulation panel, and the optional second foam layer are applied in this respective sequence. The optional outer casing can be applied after this. It is preferred that the first foam layer, the vacuum insulation panel, the optional second foam layer and the optional outer casing are arranged in a non-bonded fashion. This facilitates production of the insulated pipes according to the invention and glue is not necessary as all layers preferably fit tight into each other. Moreover, this ensures uniform insulation properties over the full length of the pipe of the invention.

The insulated pipes of the invention can be used of any thermal insulation purpose, including cold insulation systems. However, as explained above the insulated pipes according to the invention are in particular suitable for heat insulation. Therefore the invention relates also to a heating system comprising one or more insulated pipes according to the invention in connection with a heat source, for instance a district heating system.

### Detailed description of the drawings

The invention will now be further elucidated in the attached drawings. The following explanation is meant to illustrate and explain the invention and not to limit the claims. The scale and size ratio of the components shown in the drawings may deviate from the actual scales and ratios.

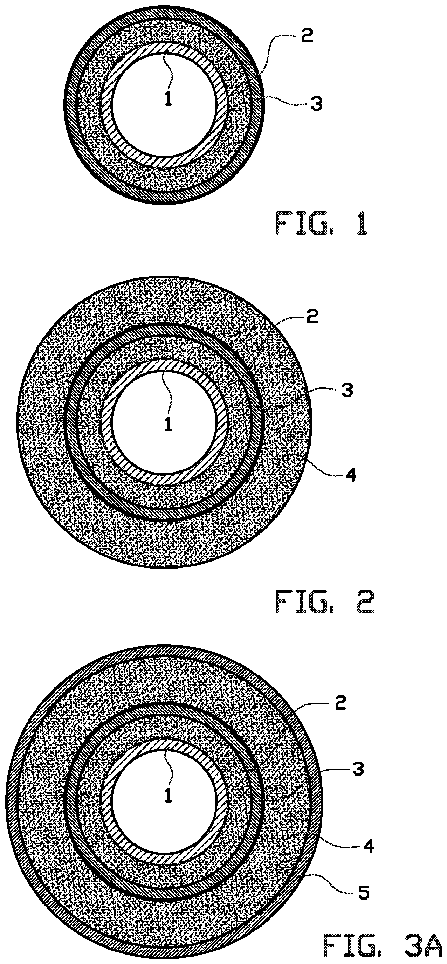

Fig. 1 shows a cross sectional view of a first embodiment of the insulated pipe of the invention which comprises a single inner pipe 1 surrounded by a first foam layer 2 and a flexible vacuum insulation panel 3 wrapped around said first foam layer 2. The ends of the vacuum insulation panel 3 are glued to each other to provide full covering of the foam layer 2. An embodiment like this provides excellent insulation properties and lifetime of the vacuum insulation panel. However, this embodiment is in particular suitable if the insulated pipe is used for applications above the ground or in protected environment, such as for instance within casings and the like.

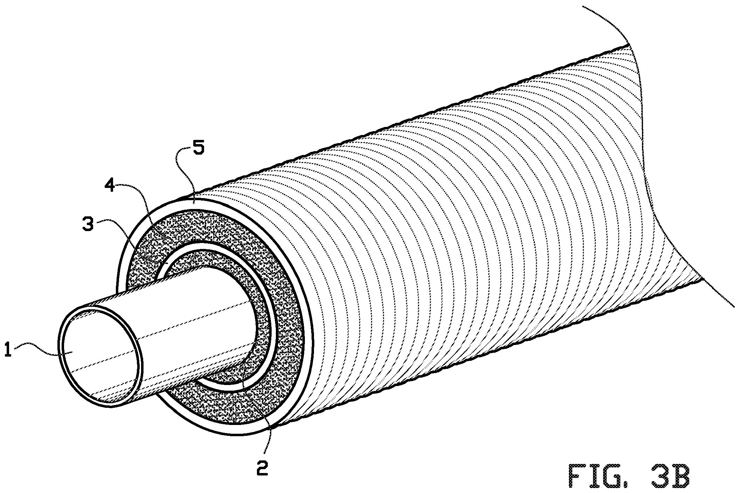

In general, if the insulated pipe of the invention is not used in a protected environment it will therefore be more preferable to have a protection around the vacuum insulation panel 3. Fig. 2 shows in a cross sectional view that a second foam layer 4 surrounds the vacuum insulation panel 3. This confers protection to the vacuum insulation panel and contributed to the isolation properties. Further protection can be provided in the form of an outer casing 5 as shown in the cross sectional view of Fig.3A and the perspective view of Fig. 3B. In the situation depicted in Fig. 3 the outer casing 5 is a corrugated plastic outer casing as shown in the perspective view represented by Fig.3B. The ribs of the corrugated outer casing 5 provide further strength.

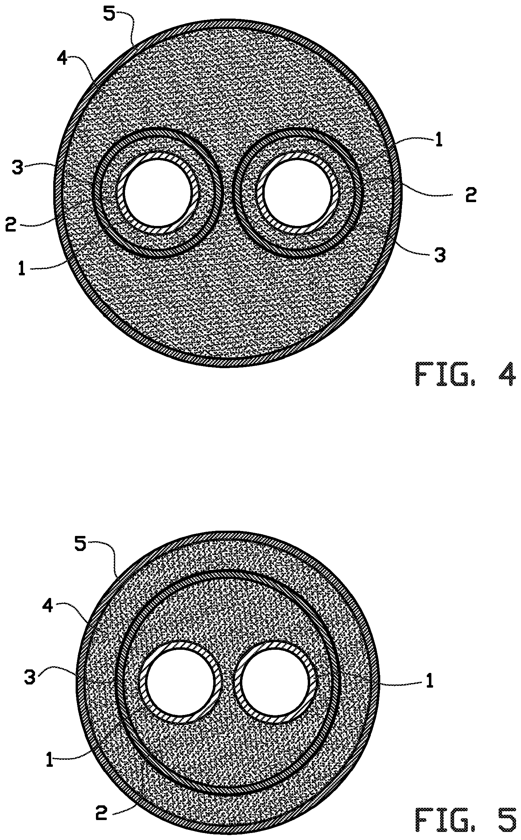

As mentioned above the insulated pipe of the invention may also be designed as an embodiment comprising multiple inner pipes. Such embodiments are shown in the cross sectional views of Fig. 4 and Fig. 5.

In the embodiment in Fig. 4 two inner pipes 1 are each provided with a separate first foam layer 2 and vacuum insulation panel 3 surrounding it. In this embodiment a single second foam layer 4 surrounds both vacuum insulation panels 3. The second foam layer is surrounded by an outer casing 5, such as a corrugated plastic outer casing.

In the embodiment in Fig. 5 two inner pipes 1 are provided with a shared first foam layer 2 and a single vacuum insulation panel 3 surrounding it. The second foam layer 4 surrounds the vacuum insulation panel 3. The second foam layer is surrounded by an outer casing 5, such as a corrugated plastic outer casing.

The principle shown in the embodiments shown in Fig. 4 and 5 is also applicable to insulated pipes comprising more than two inner pipes.

## Claims

1. An insulated pipe, comprising one or more inner pipes (1) surrounded by a discrete first foam layer (2) and a flexible vacuum insulation panel (3) wrapped around said first foam layer (2) .

2. The insulated pipe according to claim 1, further comprising a second foam layer (4) surrounding said flexible vacuum insulation panel (3).

3. The insulated pipe according to claim 1 or 2, further comprising an outer casing (5).

4. The insulated pipe according to claim 3, wherein said outer casing (5) is which is a corrugated outer casing.

5. The insulated pipe according to claim 3 or 4, wherein said outer casing (5) is a plastic casing.

6. The insulated pipe according to any of the previous claims, wherein said first foam layer (2) and said optional second foam layer (4) are flexible foam layers.

7. The insulated pipe according to any of the previous claims, wherein said first foam layer (2) and said optional second foam layer (4) are based on a non-crosslinked polyolefine foam.

8. The insulated pipe according to any of the previous claims, wherein said one or more inner pipes (1) are plastic pipes.

9. The insulated pipe according to any of the previous claims wherein the insulated pipe comprises only one inner pipe (1) arranged in a concentric manner with respect to the first foam layer (2), the flexible vacuum insulation panel (3), the optional second foam layer (4) and the optional outer casing (5) .

10. The insulated pipe according to any of the claims 1-8, wherein the insulated pipe comprises multiple inner pipes (1), each pipe surrounded by a separate flexible vacuum insulation panel (3); wherein said first foam layer (2) is provided between the outer surface of said pipes (1) and said flexible vacuum insulation panel (3).

11. The insulated pipe according to any of the claims 1-8, wherein the insulated pipe comprises multiple inner pipes (1), said multiple pipes surrounded by a common flexible vacuum insulation panel (3); wherein said first foam layer (2) is provided between the outer surface of said pipes (1) and said common flexible vacuum insulation panel (3).

12. The insulated pipe according to claim 10 or 11, wherein said multiple pipes (1) are two pipes.

13. The insulated pipe according to any of the previous claims wherein the first foam layer (2), the flexible vacuum insulation panel (3), the optional second foam layer (4) and the optional outer casing (5) are arranged in a non-bonded fashion.

14. A heating system comprising one or more insulated pipes according to any of the previous claims in connection with a heat source.

15. The heating system according to claim 14, which is a district heating system.

## Patentansprüche

1. Isoliertes Rohr, bestehend aus einem oder mehreren Innenrohren (1), die von einer diskreten ersten Schaumstoffschicht (2) umgeben sind, und ein flexibles Vakuumisolationspaneel (3), das um die erste Schaumstoffschicht (2) gewickelt ist.

2. Isoliertes Rohr nach Anspruch 1, ferner umfassend eine zweite Schaumstoffschicht (4), die das flexible Vakuumisolationspaneel (3) umgibt.

3. Isoliertes Rohr nach Anspruch 1 oder 2, das ferner eine äußere Ummantelung (5) aufweist.

4. Isoliertes Rohr nach Anspruch 3, wobei der Außenmantel (5) ein gewellter Außenmantel ist.

5. Isoliertes Rohr nach Anspruch 3 oder4, wobei der Außenmantel (5) ein Kunststoffmantel ist.

6. Isoliertes Rohr nach einem der vorhergehenden Ansprüche, wobei die erste Schaumstoffschicht (2) und die optionale zweite Schaumstoffschicht (4) flexible Schaumstoffschichten sind.

7. Isoliertes Rohr nach einem der vorhergehenden Ansprüche, wobei die erste Schaumstoffschicht (2) und die optionale zweite Schaumstoffschicht (4) auf einem nicht vernetzten Polyolefinschaum basieren.

8. Isoliertes Rohr nach einem der vorhergehenden Ansprüche, wobei das eine oder die mehreren Innenrohre (1) Kunststoffrohre sind.

9. Isoliertes Rohr nach einem der vorhergehenden Ansprüche, wobei das isolierte Rohr nur ein Innenrohr (1) umfasst, das in konzentrischer Weise zu der ersten Schaumstoffschicht (2), dem flexiblen Vakuumisolationspaneel (3), der optionalen zweiten Schaumstoffschicht (4) und dem optionalen Außenmantel (5) angeordnet ist.

10. Isoliertes Rohr nach einem der Ansprüche 1 - 8, wobei das isolierte Rohr mehrere Innenrohre (1) umfasst, jedes Rohr von einem separaten flexiblen Vakuumisolationspaneel (3) umgeben ist; wobei die erste Schaumstoffschicht (2) zwischen der Außenfläche der Rohre (1) und dem flexiblen Vakuumisolationspaneel (3) bereitgestellt ist.

11. Isoliertes Rohr nach einem der Ansprüche 1 - 8, wobei das isolierte Rohr mehrere Innenrohre (1) umfasst, die mehreren Rohre von einem gemeinsamen flexiblen Vakuumisolationspaneel (3) umgeben sind; wobei die erste Schaumstoffschicht (2) zwischen der Außenfläche der Rohre (1) und dem gemeinsamen flexiblen Vakuumisolationspaneel (3) bereitgestellt ist.

12. Isoliertes Rohr nach Anspruch 10 oder 11, wobei die mehreren Rohre (1) zwei Rohre sind.

13. Isoliertes Rohr nach einem der vorhergehenden Ansprüche, wobei die erste Schaumstoffschicht (2), das flexible Vakuumisolationspaneel (3), die optionale zweite Schaumstoffschicht (4) und die optionale äußere Ummantelung (5) in einer nicht verbundenen Weise angeordnet sind.

14. Heizsystem mit einem oder mehreren isolierten Rohren nach einem der vorhergehenden Ansprüche in Verbindung mit einer Wärmequelle.

15. Heizsystem nach Anspruch 14, bei dem es sich um ein Fernwärmesystem handelt.

## Revendications

1. Conduite isolée, comprenant une ou plusieurs conduites intérieures (1) entourées d'une première couche de mousse distincte (2) et d'un panneau d'isolation sous vide flexible (3) enroulé autour de ladite première couche de mousse (2).

2. Conduite isolée selon la revendication 1, comprenant en outre une seconde couche de mousse (4) entourant ledit panneau d'isolation sous vide flexible (3).

3. Conduite isolée selon la revendication 1 ou 2, comprenant en outre une enveloppe extérieure (5).

4. Conduite isolée selon la revendication 3, dans laquelle ladite enveloppe extérieure (5) est une enveloppe extérieure ondulée.

5. Conduite isolée selon la revendication 3 ou 4, dans laquelle ladite enveloppe extérieure (5) est une enveloppe en plastique.

6. Conduite isolée selon l'une quelconque des revendications précédentes, dans laquelle ladite première couche de mousse (2) et ladite seconde couche de mousse (4) optionnelle sont des couches de mousse flexibles.

7. Conduite isolée selon l'une quelconque des revendications précédentes, dans laquelle ladite première couche de mousse (2) et ladite seconde couche de mousse (4) optionnelle sont basées sur une mousse de polyoléfine non réticulée.

8. Conduite isolée selon l'une quelconque des revendications précédentes, dans laquelle lesdites une ou plusieurs conduites intérieures (1) sont des conduites en plastique.

9. Conduite isolée selon l'une quelconque des revendications précédentes dans laquelle la conduite isolée comprend seulement une conduite intérieure (1) agencée d'une manière concentrique par rapport à la première couche de mousse (2), au panneau d'isolation sous vide flexible (3), à la seconde couche de mousse (4) optionnelle et à l'enveloppe extérieure (5) optionnelle.

10. Conduite isolée selon l'une quelconque des revendications 1-8, dans laquelle la conduite isolée comprend de multiples conduites intérieures (1), chaque conduite étant entourée d'un panneau d'isolation sous vide flexible (3) séparé ; dans laquelle ladite première couche de mousse (2) est disposée entre la surface extérieure desdites conduites (1) et ledit panneau d'isolation sous vide flexible (3).

11. Conduite isolée selon l'une quelconque des revendications 1-8, dans laquelle la conduite isolée comprend de multiples conduites intérieures (1), lesdites multiples conduites étant entourées d'un panneau d'isolation sous vide flexible (3) commun ; dans laquelle ladite première couche de mousse (2) est disposée entre la surface extérieure desdites conduites (1) et ledit panneau d'isolation sous vide flexible (3) commun.

12. Conduite isolée selon la revendication 10 ou 11, dans laquelle lesdites multiples conduites (1) sont deux conduites.

13. Conduite isolée selon l'une quelconque des revendications précédentes dans laquelle la première couche de mousse (2), le panneau d'isolation sous vide flexible (3), la seconde couche de mousse (4) optionnelle et l'enveloppe extérieure (5) optionnelle sont agencés d'une manière non liée.

14. Système de chauffage comprenant une ou plusieurs conduites isolées selon l'une quelconque des revendications précédentes en raccordement avec une source de chaleur.

15. Système de chauffage selon la revendication 14, qui est un système de chauffage urbain.
